(19) Europäisches Patentamt

European Patent Office

Office européen des brevets

(11) EP 1 093 926 A2

(12) **EUROPEAN PATENT APPLICATION**

(43) Date of publication:
25.04.2001 Bulletin 2001/17

(51) Int Cl.[7]: **B41J 3/407**

(21) Application number: 01100088.2

(22) Date of filing: 27.12.1995

(84) Designated Contracting States:
**DE FR GB**

(30) Priority: 28.12.1994 JP 32681194
24.11.1995 JP 30618795

(62) Document number(s) of the earlier application(s) in
accordance with Art. 76 EPC:
**95120564.0 / 0 719 650**

(71) Applicant: **SEIKO EPSON CORPORATION**
**Shinjuku-ku, Tokyo 163-0811 (JP)**

(72) Inventor: **Ohtsuka, Nobutoshi**
**Suwa-shi, Nagano-ken 3928502 (JP)**

(74) Representative: **Hoffmann, Eckart, Dipl.-Ing.**
**Patentanwalt,**
**Bahnhofstrasse 103**
**82166 Gräfelfing (DE)**

Remarks:
This application was filed on 11 - 01 - 2001 as a
divisional application to the application mentioned
under INID code 62.

(54) **Printer and method of ink-jet printing on a tape-shaped recording medium**

(57)    Described is a method that allows solid ink-jet printing on tape-shaped recording media (T) without leaving any unprinted portions on the leading end and/ or the trailing end thereof. In the longitudinal direction solid printing is performed so as to overlap positions where the recording medium will be cut.

Fig. 5

**Description**

The present invention relates to a solid printing method which employs an ink-jet head to conduct solid printing without gaps upon a tape-shaped recording medium of a certain width. The present invention also relates to a tape-shaped recording medium appropriate for such solid printing.

"Solid printing" as the term is used herein means completely coloring all or parts of a recording medium without gaps. For example, a frame may be solidly printed to enclose text or graphics printing, or a background color may be applied to the recording medium by solid printing and text of graphics printed normally thereon in one or more a different colors.

Various types of ink-jet printers are known in the art. Among those are small-sized printers configured to conduct color printing upon colored tapes of any of various colors. In these printers color printing is performed by supplying to the print head ink from ink reservoirs of the colors cyan (C), magenta (M), and yellow (Y).

As for tape-shaped recording media, adhesive tapes are known which comprise a base layer coated with an adhesive layer which in turn is covered with a backing layer or backing paper. After printing, such tapes are cut into a certain length and then the backing layer is peeled off. The tape with the backing layer removed is used as a label which can be applied to a desired surface. Printers which conduct printing on such kind of tape have been put on the market in recent years and are called "label printers".

The following problems occur when an ink-jet printer is employed to conduct solid printing which completely colors the tape without gaps.

In a printer that prints in the lateral direction (direction of the width of the tape) by moving a print head in a reciprocating fashion across the tape, solid printing in the lateral direction requires that the printing is started at one lateral edge of the tape and stopped at the other. However, it is generally difficult to drive the print head so that printing is started precisely at the one edge and is stopped precisely at the other edge. This difficulty arises from deviations in the lateral position of the tape, or from a timing error between the ink ejection operation and the movement of the print head. If printing is not controlled precisely, for example, if the start of the printing operation is delayed from the time at which the print head is at the edge, a non-printed area is produced in a region near the edge. On the other hand, if printing starts too early, ink droplets ejected from the print head impinge on and adhere to a paper guide which is positioned opposite to the print head. Ink droplets adhering to the paper guide tend to soil the tape as it is transported over the paper guide.

Similar problems are encountered with solid printing in the lengthwise direction of the tape. In other words, it is just as difficult to conduct solid printing with respect to the leading end of the tape as with the above case of the lateral edges, and similar problems occur. After being printed the tape has to be cut in order that it can be used. Attempts to conduct solid printing which would completely fill up to the trailing end of the cut tape would require precise transporting of the tape and driving of the print head. Further, the cutting position would also need to be accurately controlled.

To overcome these problems, EP-A-EP-A-0 707 973 (prior art according to Art. 54(3)) discloses an ink-jet printer having control means for setting the printing range of the print head such that it extends outside at least one of the edges of a recording medium. The printer employs ink capturing means to capture ink droplets ejected by the print head outside the recording medium, thereby to avoid spoiling of a paper guide.

The present invention is intended to overcome the problems of the prior art explained above and its object is to provide a printer and a method which allow to solidly print to at least one edge in the longitudinal direction of a tape-like recording medium without leaving any unprinted marginal portion and without ink droplets being allowed to adhere to a paper guide.

This object is achieved with a printer as claimed in claims 1 and 2 and a method as claimed in claims 10 and 11, respectively. Preferred embodiments of the invention are subject-matter of the dependent claims.

According to the present invention, solid printing without gaps is achieved by printing beyond the one or more edges of a surface to be solidly printed. Printing beyond the edge avoids the problems resulting from positional deviations and does not require precise control of print start or end relative to the respective edge.

Further advantages and features of the invention will be appreciated from the following detailed description of preferred embodiments taken in conjunction with the drawings, in which:

Fig. 1            is a schematic perspective view of an ink-jet printer employing the present invention,

Fig. 2            is a schematic cross-sectional view taken along line II-II in Fig. 1,

Fig. 3            is schematic diagram showing the main elements of the printer of Fig. 1,

Fig. 4            is a schematic diagram illustrating the main elements, seen from above, of the printer of Fig. 1,

Fig. 5            is diagram illustrating one example of a tape-shaped recording medium according to the invention wherein (a) is a partial perspective view, (b) is a cross-sectional view, and (c) is a partial plan view,

Fig. 6 is a block diagram illustrating a control system of the printer of Fig. 1,

Fig. 7 is a diagram illustrating another example of the tape-shaped recording medium wherein (a) is a partial perspective view, and (b) is a cross-sectional view,

Fig. 8 is an explanatory diagram illustrating a mechanism for cutting along both lateral edges of the image-receiving surface of a tape-shaped recording medium,

Fig. 9 is an explanatory diagram illustrating the solid printing operation in the longitudinal direction of the tape-shaped recording medium,

Fig. 10 and 11 explanatory diagrams illustrating the principle of adjusting the width of a leading solid printing portion in the longitudinal direction of the tape-shaped recording medium,

Fig. 12 and 13 explanatory diagrams illustrating the principle of adjusting the width of a trailing solid printing portion in the longitudinal direction of the tape,

Fig. 14 is an explanatory diagram illustrating how the amount of wasted tape is reduced in continuous solid printing operation,

Fig. 15 is a perspective view of yet another example of the tape-shaped recording medium, and

Fig. 16 is a perspective view of a piece of tape-shaped recording medium of still another example of the tape-shaped recording medium.

Structure of the printer

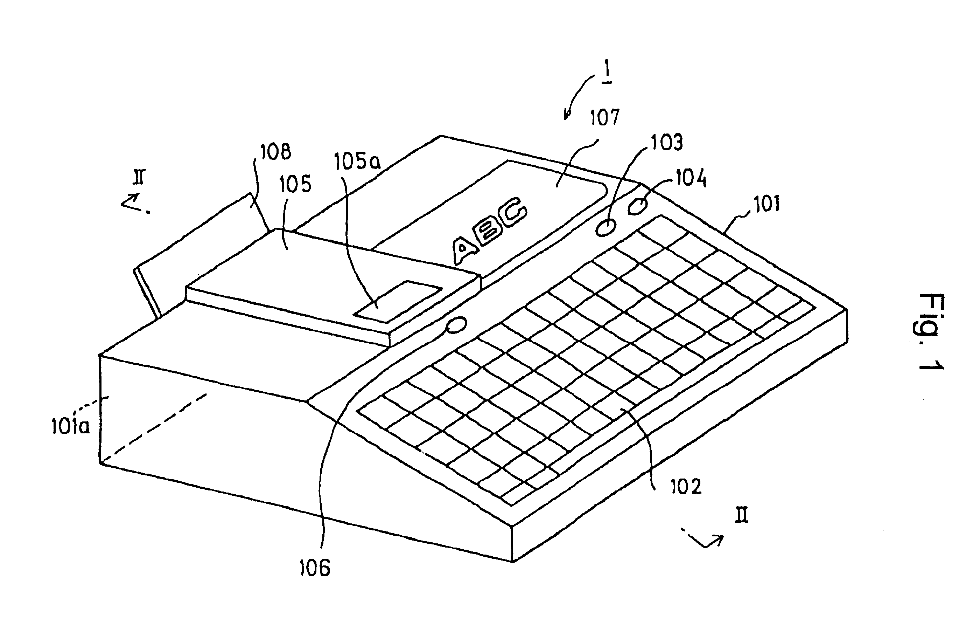

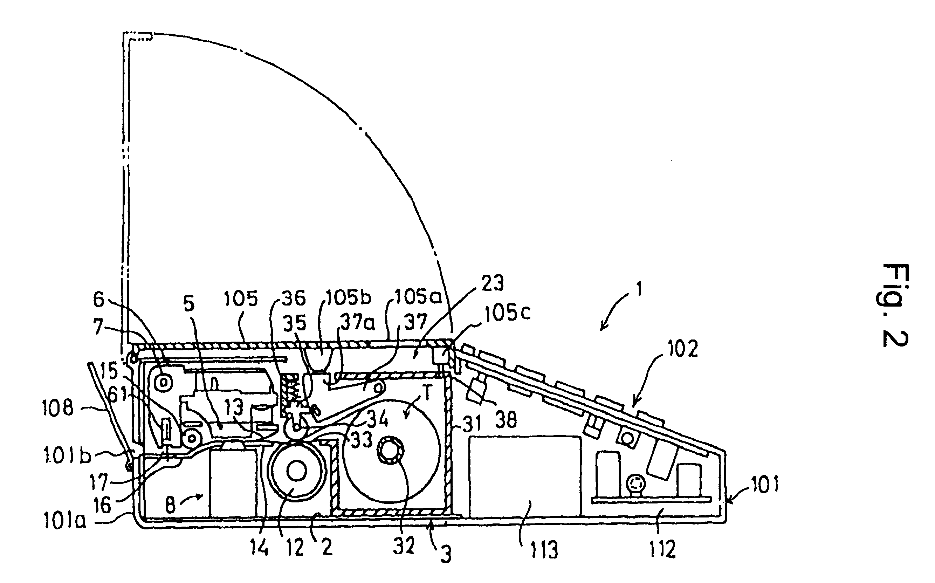

Before explaining embodiments of the invention, the structure of an ink-jet printer suitable for performing the method according to the invention will be described with reference to Figs. 1 to 4. The ink-jet printer of this embodiment is of the type called "label printer".
Referring to Figs. 1 and 2, the ink-jet printer 1 has a thin casing 101 in the form of a generally rectangular prism. The front part of the upper plate of the casing 101 forms an operation control panel 102. Various keys such as a print button 103 for starting a printing operation and a power switch button 104 are disposed on the operation control panel 102. A lid 105 is disposed on the top of the rear part of the casing 101. The lid 105 can be opened and closed by means of rotation about the rear end. By pressing a lid open-close button 106 disposed on the operation control panel 102, a lock is released and the lid 105 may be opened so that the inside of the casing 101 can be seen from the top side of the ink-jet printer 1.
Beneath the lid 105 is a mounting part 23 in which a tape cartridge 3, described below, can be mounted. Thus, the tape cartridge 3 can be mounted into or removed from the mounting part 23 when the lid 105 is open. The lid 105 has a transparent window 105a through which a user can see whether a tape cartridge 3 is mounted. A display unit 107 such as a liquid crystal display unit for displaying character information input via the keys on the operation control panel 102 is disposed in an area adjacent to the lid 105.
A tape outlet 101b is formed in a rear side 101a of the casing 101 so that a printed tape may be carried out through the tape outlet 101b. When the printed tape is carried out through the tape outlet 101b, the tape is guided by a guide plate 108. A power supply unit 112 and a battery 113 such as a nickel-cadmium battery are disposed inside of the casing 101 below the operation control panel 102.

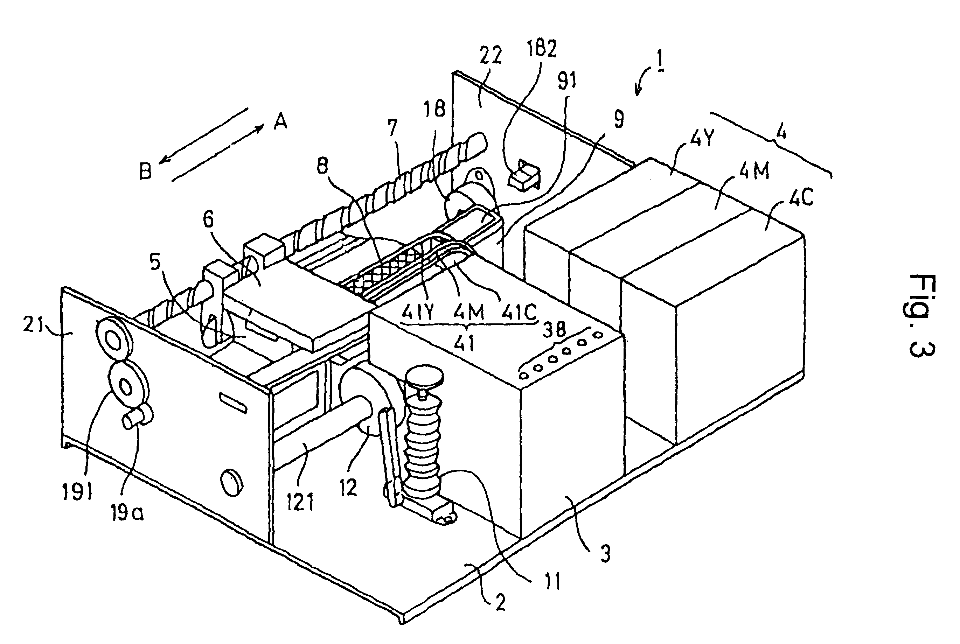

Fig. 3 is a schematic diagram illustrating the main elements of the ink-jet printer 1 disposed inside the casing 101. In Fig. 3, reference numeral 2 denotes a base on which the elements are mounted. The base 2 is placed on the bottom of the casing 101. The tape cartridge 3, three ink reservoirs 4 (4C, 4M, 4Y), and an ink-jet print head 5 are disposed on the base 2. The print head 5 is held on a head carriage 6. The head carriage 6 is supported by a lead screw 7 extending between right side-plate 22 and left side-plate 21 of the base 2. The carriage 6 is also supported by a guide rod (not shown) disposed in parallel to the lead screw 7 so that the carriage 6 can move to the left and right (along the lead screw) without rotation. That is, if the lead screw 7 is rotated, the head carriage 6 and the print head 5 move to the right or to the left in the directions denoted by arrows A and B in Fig. 3. A tape guide element 8 is disposed at the center of the movement range of the print head 5 in such a manner that the tape guide element 8 faces the print head 5.
A head capping mechanism 9 is disposed between the guide element 8 and the right side-plate 22. The head capping mechanism 9 is located at a position beyond one end of the path along which the print head 5 moves during a printing operation. When the print head 5 is not in use, the print head 5 moves to the head capping mechanism 9 and is held there in a state in which the print head 5 is capped by a cap face 91 of the capping mechanism 9. At the side of the tape cartridge 3 is an ink pump 11 which may be operated manually, as required, so as to forcibly supply ink from the ink reservoirs 4 to the print head 5.

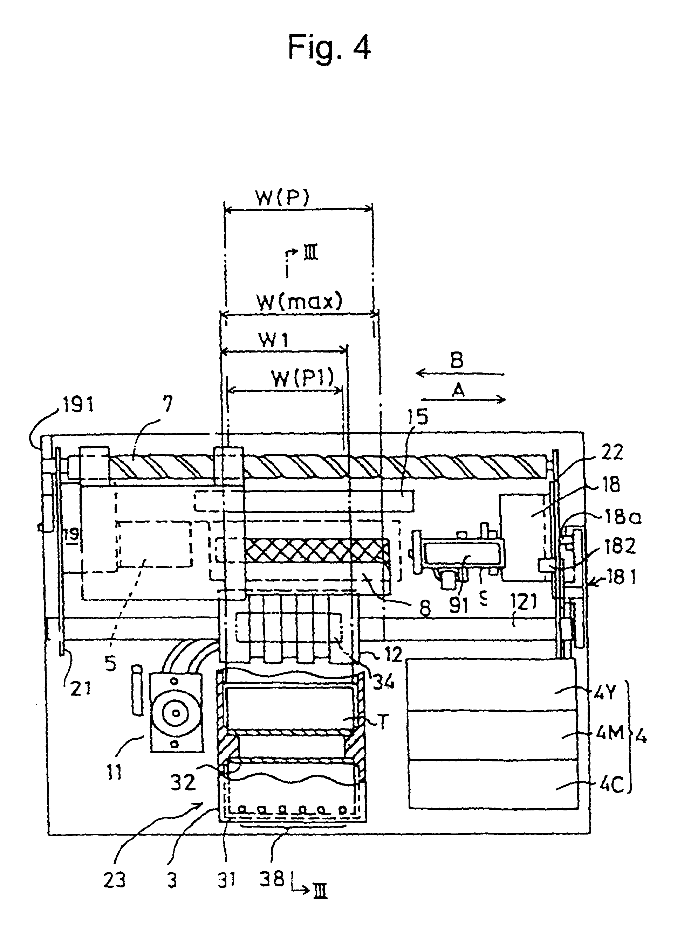

Fig. 4 illustrates the layout, as seen from above in Fig. 3, of the main elements of the ink-jet printer 1. Referring to Fig. 4 as well as other figures, the main elements of the ink-jet printer 1 of the first embodiment will be described below in detail.

The tape cartridge 3 includes a case 31, a core axis 32 accommodated in the case 31 in such a manner that the core axis 32 can rotate, and a tape T having a width W1 wherein the tape T is wound around the core axis 32. The upper part of one side of the case 31 protrudes toward the rear side of the ink-jet printer 1. Within this protruding part is formed a tape feeder including a tape guide 33 made of PET (polyethylene) film and a tape pressing roller 34 which is pressed against the surface of the tape guide 33 by a certain elastic force provided by a coil spring 36.

When the tape cartridge 3 is initially loaded into the ink-jet printer 1, the leading edge of the tape T is placed between the tape guide 33 and the tape pressing roller 34. A supporting element 35 carrying the tape pressing roller 34 is supported on a side wall of the case 31 in such a manner that it can move up and down relative to the tape guide 33. The coil spring 36 urges the supporting element 35 down toward the tape guide 33. The supporting element 35 is coupled to a lever 37. The lever 37 has an upper end face 37a protruding outside the case 31 of tape cartridge 3 on the upper side of the case 31. When the upper end face 37a is pushed downward, the tape pressing roller 34 is pressed toward the tape guide 33. On the upper surface of the case 31 are six indicators 38 for indicating the width of the tape T inside the case.

The tape cartridge 3 is removably mounted in the mounting part 23. In the mounting part 23, a tape feeding roller 12 is disposed just below the tape guide 33 which defines the tape delivery portion of the tape cartridge 3. The roller 12 has alternating portions of large diameter and small diameter. As described above, the lid 105 is disposed just above the tape cartridge 3 so that the tape cartridge can be mounted or removed when the lid 105 is open.

As can be seen from Fig. 2, the lid 105 has a pushing element 105b by which the upper end face 37a of the lever 37 is pushed down when the lid 105 is closed. The lid 105, which faces the tape width indicators 38 formed on the upper surface of the case 31 of the tape cartridge 3, is provided with a detector unit 105c for detecting the tape width W1 indicated by the indicators 38.

The transport path of the tape T fed from the tape cartridge 3 will now be described. The tape T is fed out of the case 31 by means of the tape feeding roller 12. A plurality of tape guide pieces 13 made of a PET film are disposed in such a manner that they are in contact with the surface of the short diameter portions of the tape feeding roller 12. These tape guide pieces 13 ensure that the leading edge of the tape T is correctly guided in the forward direction of the transport path. A guide 14 made of stainless steel is disposed in the transport path ahead of the tape guide pieces 13. The tape T is guided toward the printing position by the guide 14 and a guide disposed opposite the guide 14. The printing position is defined by the positions of the print head 5 and the guide element 8 disposed opposite the print head 5. After passing the printing position, the tape T is pressed against a guide 16 by a tape pressing roller 15, and further passes a tape cutter position 17 where the tape is cut. Then, the tape T is carried out through the tape outlet 101b.

The driving force transmission system relating to the tape feeding roller 12 and the head carriage 6 will now be described. As illustrated in Figs. 3 and 4, a tape feeding motor 18 is disposed on the inner surface of the right side-plate 22 of the base 2. The output shaft 18a of the motor is connected via a train of gears 181 to the end of a shaft 121 of the tape feeding roller 12. In this first embodiment, the train of gears 181 has the capability of switching the power. That is, if the head carriage 6 moves toward the side-plate 22 sufficient to abut against and press a protrusion 182 protruding inward from the side-plate 22, then the power transmission path is switched so that the power of the motor 18 is transmitted to the capping mechanism 9. A head driving motor 19 is disposed on the inner surface of the left side-plate 21. The output shaft 19a of this motor is connected to the end of the lead screw 7 via a reduction mechanism 191 including a train of gears.

The ink supply means essentially comprises the ink reservoirs 4, three ink tubes 41 (41Y, 41M, 41C) through which inks are supplied from the ink reservoirs 4 to the print head 5, and the ink pump 11 by which the inks may be pumped manually. The three ink reservoirs 4C, 4M, and 4Y contain cyan, magenta, and yellow inks, respectively, with which a color printing operation is accomplished.

Control system of the printer

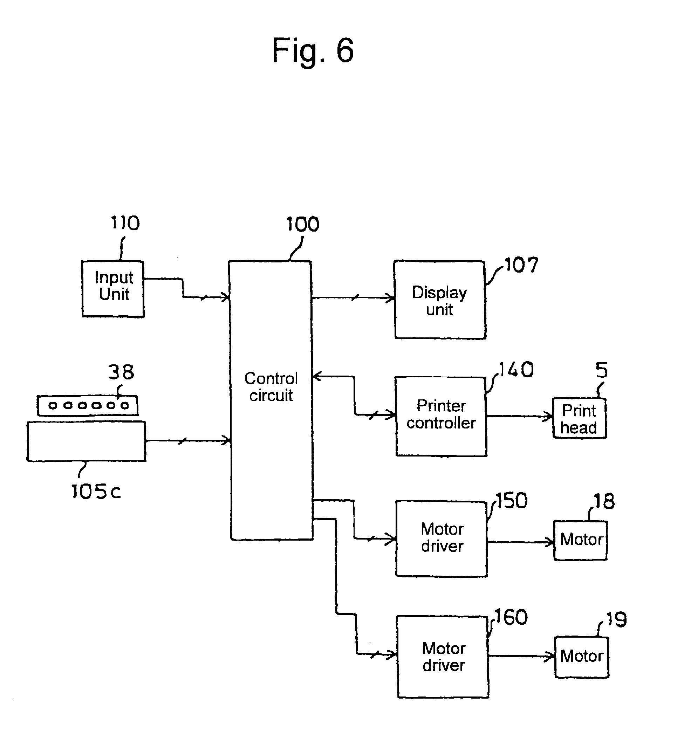

Fig. 6 is a block diagram illustrating a control system of the ink-jet printer 1. In Fig. 6, reference numeral 100 denotes a control circuit constructed with a microcomputer. An input unit 110 including the keys disposed on the operation control panel 102 of the ink-jet printer 1 is connected to respective inputs of the control circuit 100. The detector 105c for detecting the tape width is connected to respective inputs of the control circuit 100. Outputs of the control circuit 100 are connected to the display unit 107 for displaying various information, a printer controller 140 for controlling the printing operation performed by the print head 5, and motor drivers 150 and 160 for controlling and driving the motors 18 and 19. Under the control of the control circuit 100 according to a control program stored in a ROM of the control circuit 100, the printing range is set to a value corresponding to the width of the tape in the tape cartridge 3, and a printing operation such as a solid printing operation is performed as will be described in detail below.

The maximum width of the tape T that can be mounted in the ink-jet printer 1 of this embodiment is W (max) as shown in Fig. 4. The printable width W(p) in the lateral direction (movement direction of the print head 5), i.e. the width within which print head 5 is actually used to print, is set slightly narrower than the maximum tape width W(max) leaving a space both on the right and the left. In the example shown in the figure, the width of the tape actually mounted is W1, and the range printable by the print head 5 is set to W(p1) which is slightly narrower. The tape width of the mounted tape cartridge 3 can be detected by reading the six indicators 38. For example, the tape width can be indicated by the existence or non-existence of holes at the positions of the indicators 38. The existence or non-existence of holes can be detected by either a mechanical sensor or an optical sensor forming the detector unit 105c mentioned before.

Configuration of the tape T

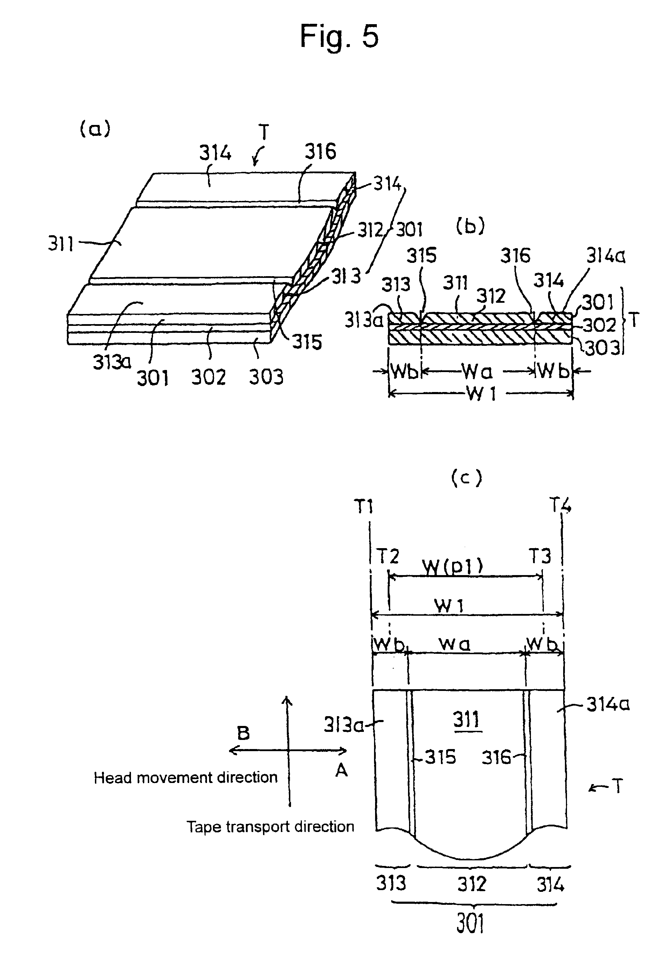

A first embodiment of a tape suitable for the present invention is shown in Fig 5. The tape T is of a 3-layer structure with a base layer 301 on top, an adhesive layer 302 on the rear side thereof, and a backing paper 303 covering the adhesive layer 302 so that it can be peeled off. The base layer 301 comprises an image-receiving portion 312 and two dummy portions 313 and 314, one on each side of the image-receiving portion. The image-receiving portion defines an image-receiving surface 311 on which solid printing is to be conducted, and dummy portions 313 and 314 define dummy surfaces 313a and 314a which are used as auxiliary means to achieve solid printing on the image-receiving surface 311. Slits 315 and 316 penetrating the base layer down to the adhesive layer are formed beforehand along the borderlines between the image-receiving portion 312 and the right and left dummy portions 313 and 314. The slits 315 and 316 facilitate peeling off only the image-receiving portion 312 from this tape. As shown in the figure, the width of the image-receiving surface 311 is Wa, while the width of each dummy surface 313a and 314a is Wb. The width of tapes T commonly used is 6, 9, 12, 18, and 24 mm, etc., and the width of the image-receiving surface 311 is preferably set to any of these values. In this case, a width of 0.5 mm to 5 mm can be used for the dummy surfaces 313a and 314a.

The widths of the two dummy portions need not necessarily be equal. With Wa representing the width of the image-receiving surface 311 and Wb, Wc representing the widths of the dummy surfaces 313a and 314a, the total width W1 of the tape T is Wa + Wb + Wc. There may be a dummy surface on only one side of the image-receiving surface 313 rather than on both sides. In this case, the total width W1 of the tape T is Wa + Wb or Wa + Wc.

For the base layer 301, a printing sheet of the configuration as disclosed in JP-A-4-115984 and JP-A-4-115985 may be employed. This printing sheet has on a transparent base a layer of mainly pseudo-boehmite generated by hydrolysis of aluminum alkoxide, on which in turn is formed a layer comprised mainly of porous silica. The printing sheet of this structure is appropriate for printing with an ink-jet printer which uses ink containing a high amount of solvent. Of course, image-receiving layers of other structures may be employed, as well.

Solid printing in the lateral direction of the tape

A solid printing operation for printing on the tape T across the entire width of the image-receiving surface 311 by means of the printer 1 described above is performed in a manner which will now be described.

As shown in Fig 5(c), the printing range in this case is set to W(p1) which is wider than the width Wa of the image-receiving surface 311, and narrower than the total width W1 of the tape (including the dummy surfaces 313a and 314a on both sides of image-receiving surface 311 in this example).

The motor 18 is driven so that the tape feeding roller 12 is rotated, thereby feeding the tape T from the tape cartridge 3 toward the printing position. In synchronization with the feeding of the tape T, the motor 19 rotates the lead screw 7 thereby moving the print head 5 via the carriage 6. The print head 5 is moved in the direction of arrow A in Fig. 5(c), and printing is started, after the print head passed the edge T1 of the tape T which has been transported to the printing position, at the point T2. i.e. within the dummy surface 313a. The end point of the head's reciprocating movement is before it passes over the other edge T4 of the tape T, namely at the point T3 which is within the dummy surface 314a.

After printing has been finished, the tape is advanced until the trailing end of the image printed on the tape T reaches the tape cutter position 17. Following this, the tape is temporarily stopped. Then the head carriage 6 is moved in the direction of arrow B and returns to the end as shown in Fig. 4. Here, a rotary cutter 61 mounted on the carriage 6 is driven, and, as the carriage 6 is moved in the direction of arrow A, the tape T is cut (note that the location of the rotary cutter 61 in the transport direction defines the tape cutter position 17 mentioned before). As a result, the tape T is delivered as a piece of tape cut to a certain length, from which, as described above, the image-receiving portion 312 alone can be peeled off, and applied to a desired surface. With the present embodiment, the image-receiving portion 312 can be peeled off by simply catching the edges of the slits 315 and 316 with one's fingertips.

After the printed tape has been cut and delivered, motor 18 rotates roller 12 in the reverse direction, and the leading end of the remaining tape T is moved back to, for example, a position immediately ahead of the printing position. The carriage 6 is moved toward the right side-plate 22 having its side press the projection 182 outwards. As a result of this, the coupling between the motor 18 and the tape feeding roller 12 is broken, and the roller 12 stops. Instead, the capping mechanism 9 is driven, and the print head 5 becomes capped.

Incidentally, when the lid 105 is opened in order to replace the tape cartridge 3, the tape T whose leading end is positioned ahead of the printing position at that time, is rewound, and returned to the position between the roller 34 and tape guide 33, which define the tape delivery portion of the tape cartridge.

As will be appreciated from the above, in the embodiment described, solid printing is achieved by using a tape having an image-receiving portion (useful portion) which defines an image-receiving surface and one or two dummy portions which define dummy surfaces adjoining one or both sides of the image-receiving surface, respectively. The ink-jet print head is controlled to eject ink droplets within a range extending onto the dummy surface(s) but not beyond the edges of the tape. After printing and cutting, the image-receiving portion is separated from the piece of tape for use as a label. The remainder of the piece of tape is no longer needed and may be disposed. In the embodiment described above, the image-receiving surface and the dummy surface(s) are defined by respective portions of the base layer of the tape. Slits separating these portions from each other exist already when the tape cartridge is installed. The main purpose of the slits is to allow for easy removal of the printed image-receiving portion from the tape. Thus, it will be appreciated that the slit(s) may be provided after or during printing. Such and other alternative embodiments will be explained below.

Other forms of the tape T

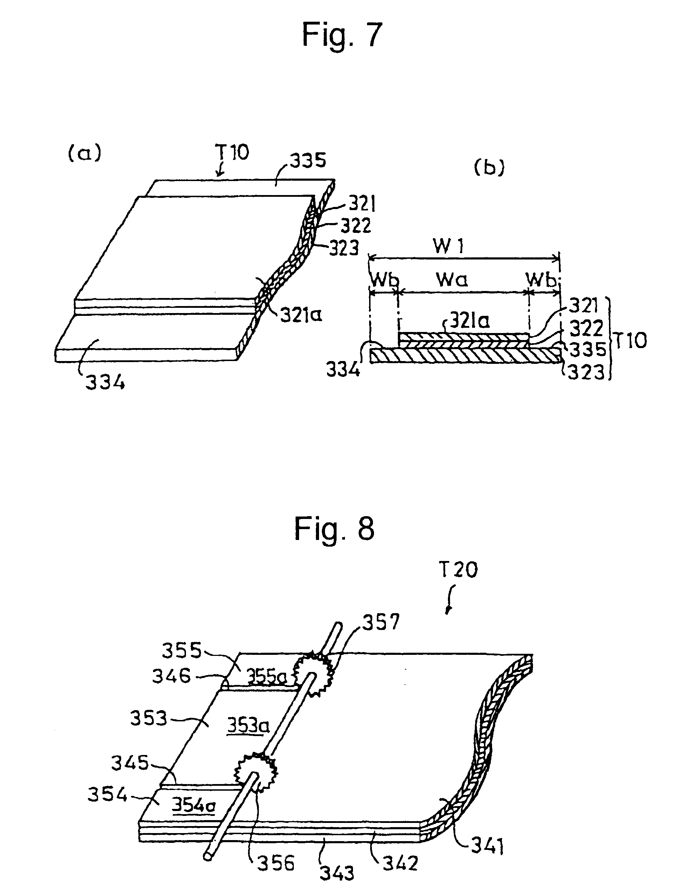

The tape T10 illustrated in Fig. 7 has backing paper 323 of a width of W1 while the widths of the base layer 321 and the adhesive layer 322 are Wa, Wa < W1. Consequently, in this case the whole base layer forms the image-receiving portion while the portions of the backing paper 323 projecting beyond the lateral edges of the base layer 321 and the adhesive layer 322 define dummy surfaces 334 and 335 which correspond to the dummy surfaces 313a and 314a of the tape T in Fig 5. Preferably, the exposed portions of the backing paper, i.e. the dummy surfaces, are formed so as to be able to absorb ink droplets.

Fig. 8 shows a tape T20 of yet another configuration. The tape T20 of this example is conventional tape comprising a base layer 341, an adhesive layer 342, and a backing sheet 343, all of the same width, sequentially layered. The difference between the tapes T and T20 is that in the latter case the image-receiving portion 353 and the dummy portions 354, 355 are not initially separated by slits. Solid printing is performed on this tape T20 just like it is on the tape T of Fig. 5 employing, however, a printer modified with respect to printer 1 described above. More particularly, in the case of employing tape T20, a pair of cutters 356 and 357 for cutting such slits 345 and 346 are provided at a position upstream of the position of the cutter 61. While two cutters 356 and 357 are shown in Fig. 8, only one may be employed if a dummy surface on only one side of the image-receiving surface is to be used. As will be appreciated by those skilled in the art, there are various ways for implementing these cutters. For instance, their lateral positions may be automatically or manually adjustable to adapt to the width of the tape used.

Solid printing in the longitudinal direction of the tape

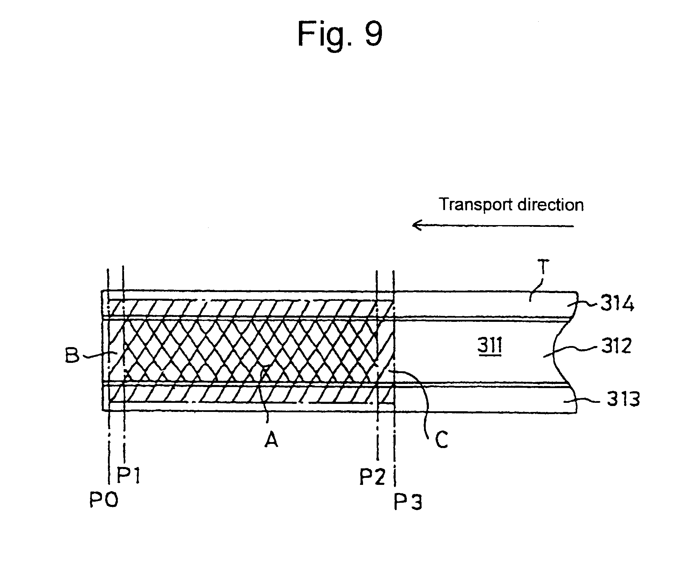

Solid printing to the leading and trailing ends in the longitudinal direction of the tape using the ink-jet printer 1 of the present embodiment will now be described with reference to Fig. 9.

With the present embodiment, when solid printing in the longitudinal direction of the tape is specified, solid printing is started at an actual solid printing start position P0 upstream of the desired solid printing start position P1 in the tape transport direction. Printing is continued to an actual solid printing end position P3 downstream of the desired solid printing end position P2.

As shown in Fig. 9, the image-receiving surface 311 of the tape T onto which solid printing has been conducted in this manner, comprises a cross-hatched region A in the center which is sandwiched between hatched regions B and C of predetermined lengths before and after the region A, namely solid printing region B on the printing start side, and solid printing region C on the printing end side. The length of region A is the target solid printing length. Of course, as mentioned above, with the present embodiment, portions of the dummy surfaces on both lateral sides of the image-receiving surface 311 are subjected to solid printing, so this area is shown hatched, as well.

Transporting of the tape T following printing is temporarily stopped when the desired solid printing start position P1 reaches the cutter position 17. Then, the rotary cutter 61 is driven, and the tape T is cut at the desired solid printing start position P1. Consequently, the leading end of the tape T is in a state of being completely solidly printed, without gaps. Following this cutting, transporting of the tape T is resumed, and continued until the desired solid printing end position P2 reaches the cutter position 17 where the transporting is temporarily stopped once more, and the rotary cutter 61 is driven to cut the tape T.

By the above explained steps a piece of tape of a certain length is obtained wherein the leading and trailing ends of the image-receiving surface 311 are in a state of being completely solidly printed, without gaps.

The above explanation assumes that the length of solid printing is shorter than the distance between the printing position and the tape cutter position, i.e. the desired solid printing start position P1 does not reach the tape cutter position 17 before solid printing is finished. However, in the case that the solid printing length is longer than the distance between the printing position and the tape cutter position, the following method can be employed instead. In this case the desired solid printing start position P1 has reached or passed the tape cutter position by the time solid printing is completed. Therefore, the tape T is moved backwards so as to register the desired solid printing start position with the tape cutter position, and the tape is cut. Then the tape is moved forward until the desired solid printing end position reaches the tape cutter position, and the tape is cut again. Alternatively, printing and transporting is stopped when the desired solid printing start position P1 passes through the tape cutter position, the tape is cut, and then printing and transporting is resumed, and the tape is moved forward and cut at the desired solid printing end position after finishing solid printing.

Adjustment of solid printing width in the longitudinal direction of the tape

There are cases where a solid printing frame is created and inverse white characters are formed within the frame, in which case it is desirable to be able to adjust the width (in the longitudinal direction) of the solid printing frame.

In one embodiment the invention allows to select among the following three modes by means of key input: (1) a wide mode M1, (2) a normal mode M2 and (3) a narrow mode M3. In the wide mode the solid printing width of the leading end in the longitudinal direction of the tape is largest, in the narrow mode it is smallest and in the normal mode it is intermediate the largest and the smallest value.

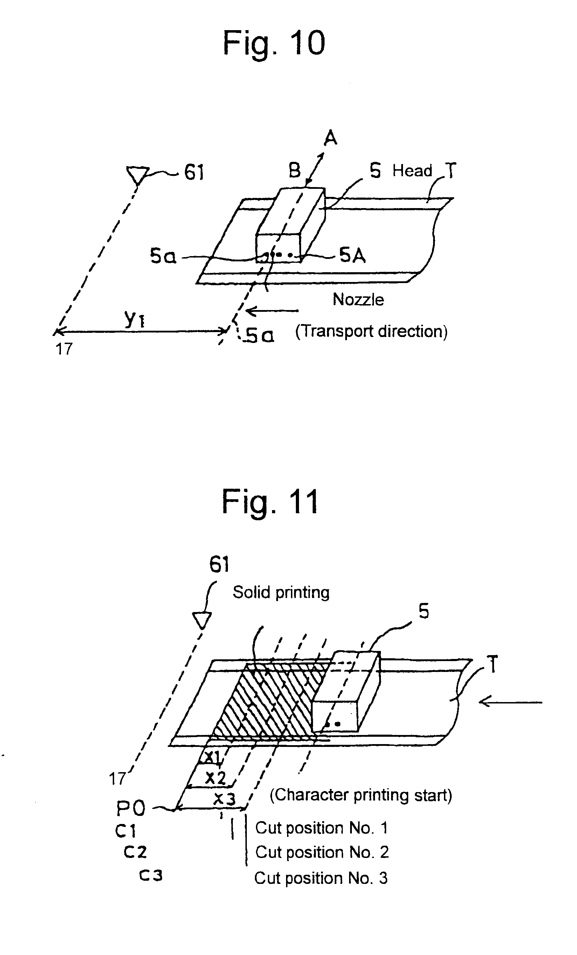

As shown in Fig. 10, print head 5 comprises multiple nozzles 5A arrayed in the direction of tape transport. The distance between the front-most nozzle 5a to the tape cutter position 17 of the rotary cutter 61 is y1. Referring to Fig. 11, in the cases of the wide mode M1, the normal mode M2 and the narrow mode M3 positions C1, C2 and C3, respectively, are defined as the desired solid printing start position, i.e. the position where the tape will be cut. The positions C1, C2 and C3 are displaced from the actual solid printing start position P0 by x1, x2 (>x1) and x3(>X2), respectively, in the direction opposite to the tape transport direction. It goes without saying that in the present embodiment, the distance y1 is set so as to be sufficiently longer than x3.

In practice, the position of the tape relative to the tape cutter position 17 is detected by means of the continuous printing time, i.e. the tape transport time, from the actual solid printing start position P0. Let the printing speed of the print head 5, i.e., the transport speed of the tape T be represented by v and the time at which printing is started at P0 by t0. Then, when the wide mode M1 is specified, the tape transport is temporarily stopped at $t1 = t0 + [(y1 + x1)/v]$, and the tape T is cut by the rotary cutter 61. In the same way, in the case of the normal width mode M2, the tape T is cut at $t2 = t0 + [(y1 + x2)/v]$, and with the narrow mode M3 at $t3 = t0 + [(y1 + x3)/v]$.

As a result, as shown in Fig. 11, in the wide mode M1, a narrow width of solid printing portion is cut off, in the narrow mode M3, a wide width of solid printing portion is cut off, and in the normal mode M2, a portion in between the two above is cut off. In this way, in the wide mode M1 a wide solid printing frame is obtained at the leading end. In the same way, a normal solid printing frame is obtained at the leading end with normal width mode M2, and a narrow solid printing frame is obtained at the leading end with narrow mode M3.

As described above, with the present embodiment, the width of the leading end of the solid printing can be adjusted by means of controlling the position at which the tape is cut after the solid printing starting position has passed the tape cutter position 17.

In the case that the mode is set as described above, the width of the solid printing at the trailing end is preferably controlled correspondingly, as described below.

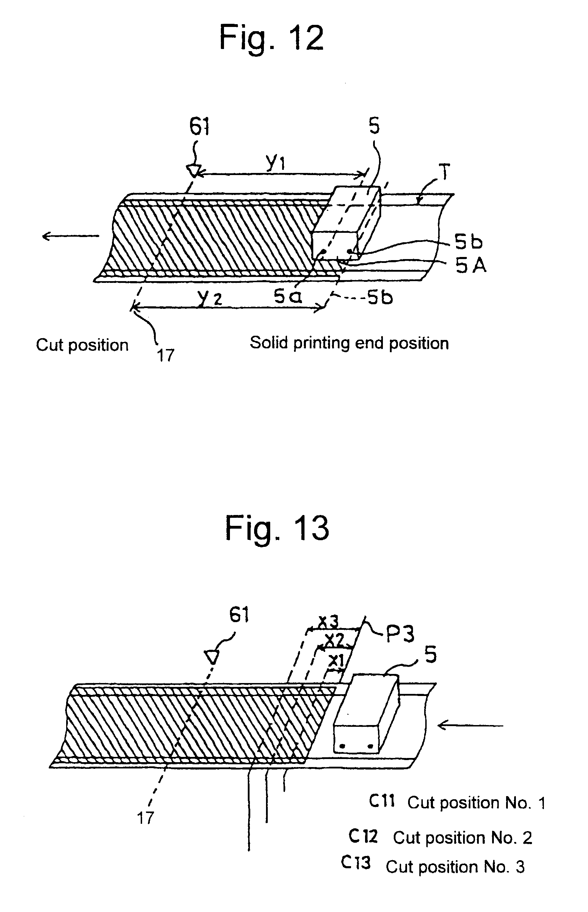

As shown in Fig. 12, nozzle 5b is the rear-most one of nozzles 5A. The distance between nozzle 5b and the tape cutter position 17 is y2. Further, as shown in Fig. 13, positions C11, C12 and C13 on the tape are defined as desired solid printing end positions where the tape will be cut in the case of the wide mode M1, the normal mode M2 and the narrow mode M3, respectively. The positions C11, C12 and C13 are displaced from the actual solid printing end position P3 in the tape transport direction by x1, x2 (>x1) and x3(>x2), respectively. It goes without saying that in the present embodiment, the distance y2 is set so as to be sufficiently longer than x3.

In this case, the distance to the above cutting positions is controlled by the continuous transport time from the time solid printing is stopped, the distance being measured by the transport speed of the tape T being v. In other words, if solid printing is stopped at a time t0e, when the wide mode M1 is specified, the tape transporting is temporarily stopped at $t1e = t0e + [(y2 - x1)/v]$, and the tape T is cut by the rotary cutter 61. In the same way, in the case of normal width mode M2, the tape T is cut at $t2e = t0e + [(y2 - x2)/v]$, and with narrow mode M3 at $t3e = t0e + [(y2 - x3)/v]$.

As a result, as shown in Fig. 13, in the wide mode M1, a narrow width of solid printing portion is cut off, in the narrow mode M3, a wide width of solid printing portion is cut off, and in the normal mode M2, a portion in between the two above is cut off. In this way, a wide solid printing frame is obtained at the trailing end. In the same way, a normal solid printing portion is obtained at the trailing end with normal width mode M2, and a short solid printing portion is obtained at the trailing end with narrow mode M3.

As described above, with the present embodiment, the width of the trailing end of the solid printing can be adjusted by means of controlling the position at which the tape is cut before the actual solid printing end position passes through the tape cutter position 17.

Continuous solid printing operation

The leading end of the tape T remaining in the printer after cutting the trailing end of a finished piece of tape as described above retains solid printing portions of the widths x1 in wide mode M1, x2 in normal mode M2 and x3 in narrow mode M3. In the case of subsequently repeating solid printing operations in the manner described above, the amount of reverse movement of the tape T is set as follows: First, in the case that printing had been conducted in the wide mode M1, the amount of backward movement L is set to:

$$L = y1 - x1 + x0 \qquad (1)$$

wherein x0 is a distance which is slightly shorter than x1. In the case that the normal mode M2 had been specified, the amount of backward movement of the tape is set to:

$$L = y1 - x2 + x0 \qquad (2)$$

In the same way, in the case that the narrow mode M3 had been specified, the amount of backward movement of the tape is set to:

$$L = y1 - x3 + x0 \qquad (3)$$

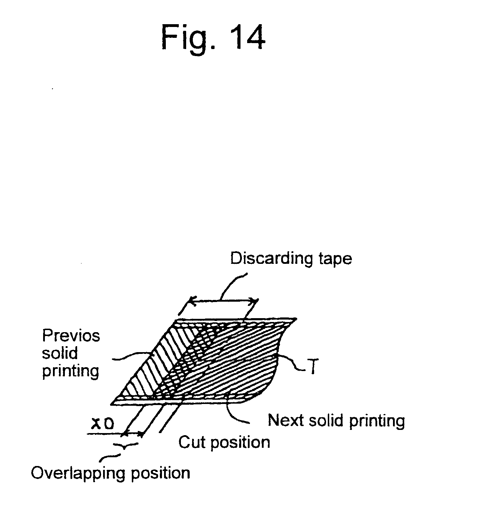

As shown in Fig. 14, setting the tape reversal amount in this way results in the next solid printing operation starting in a state of overlapping the previous solid printing portion by the length of x0. Consequently, the amount of tape which is cut away and wasted in the next solid printing operation can be reduced by the length of x0, as compared with the case of starting the next solid printing operation from behind the previous actual solid printing end P3. If the amount of overlap is changed depending on the mode of the previous solid printing, the amount of tape which is wasted can be reduced even further. This is accomplished when in equation (1) x0 is replaced by x10, in equation (2) by x20 and in equation (3) by x30, x10 being slightly shorter than x1, x20 being slightly shorter than x2 and x30 being slightly shorter than x3.

Other embodiments of the tape

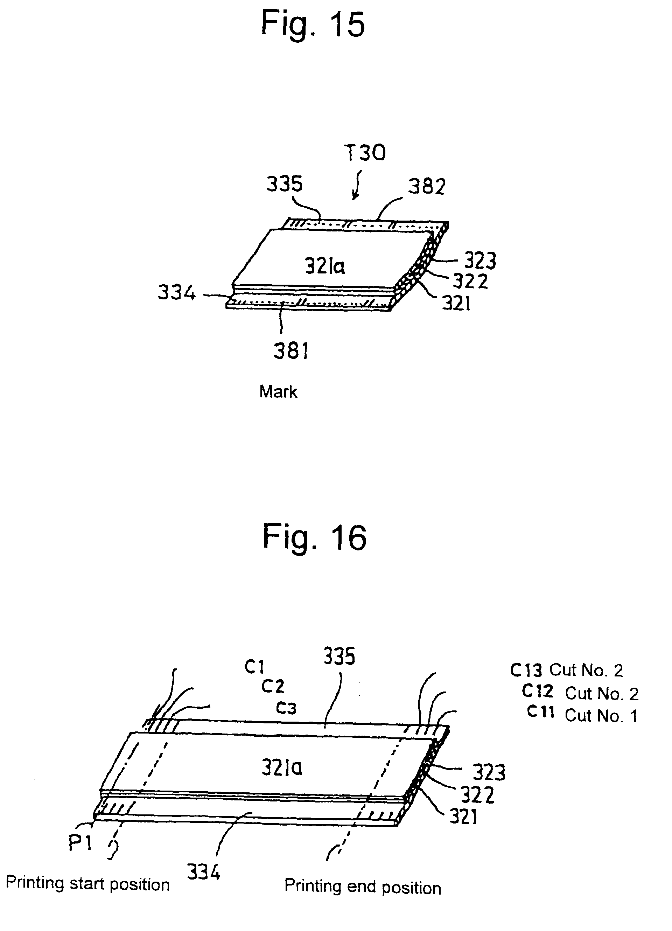

Fig. 15 shows yet another example of the tape which can be used with the method according to the invention. The basic structure of this tape T30 is the same as that of tape T10 shown in Fig. 7. Consequently, the same numerals are used to denote the same portions as with T10 in Fig. 7, and the descriptions thereof will be omitted. The characteristic feature of the tape T30 is that marks 381 and 382 are formed in the longitudinal direction of the tape at predetermined intervals upon the dummy surfaces 334 and 335 which are on either side.

The benefit of such tape T30 is as follows: In the case that a user has set the solid printing frame width on the leading and trailing ends, as described above, to a mistaken setting, then formation of solid printing frame on the leading and trailing ends of a width which is other than that desired results. In such a case, the user can simply cut the leading and trailing ends with scissors, etc.. However, it is difficult to make a cut which is accurately at a right angle to the longitudinal direction, necessitating the use of a ruler. Further, it is also difficult to make the cuts without a ruler so that the width of the solid printing frame of the leading and trailing edges become the same. However, with the tape T30 of the present embodiment, marks 381 and 382 allow for usage as guides for cutting with scissors, etc., enabling accurate cutting of the leading and trailing edges without usage of a ruler. Further, such marks may be made on the tape beforehand, but a configuration where the marks are printed with the print head 5, as necessary, may be employed, instead. In this case, as shown in Fig. 16, since it is possible for the user to select the width of the leading and trailing solid printing edges, wide, normal, or narrow, it is desirable to print the cutting positions corresponding to these.

In the above description, examples of so-called adhesive tapes possessing an adhesive layer and backing paper were described. However, it goes without saying that the present invention can be applied in the same manner to normal tape-shaped recording media which posses no adhesive layer nor a backing paper.

The invention described above may be summarized as follows:

One embodiment uses the image-receiving surface of a tape-shaped recording medium of a predetermined width; a portion thereof which is narrower than the full width is used for the actual image-receiving surface, while other portions are used as dummy (image-receiving) surface. The solid printing action involves solid printing in such a manner that the printing overlaps from the edge of this narrower image-receiving surface onto the outer dummy surface portion. After solid printing, the unnecessary dummy surface portion is cut loose, thereby obtaining a piece of printed tape-shaped printing medium solidly printed in the longitudinal direction without unprinted gaps at the edges.

The tape-shaped printing medium employed with the present invention may be of a construction wherein the surface of thereof is comprised of an image-receiving surface and an dummy surface, an adhesive layer is formed on the reverse face of the image-receiving layer, and a peeling paper layer covers the adhesive layer.

Using such a tape-shaped printing medium enables post-printing removal of the peeling paper so that the medium can be applied to a desired surface, which is handy.

Now, the border between the image-receiving surface and the dummy surface may be provided with a slit formation. This enables removal of the image-receiving portion on which an image receiving surface has been formed following solid printing from the portions on either one or both sides comprising dummy surfaces, without usage of a cutting blade, etc., for the removal action, which is also handy. Further, the image-receiving layer portion alone can be peeled away from the peeling paper side, by simply catching with one's fingertips the image-receiving portion upon which the image-receiving surface is formed.

It goes without saying that the dummy surface may be cut away from the image-receiving surface, by means of cutting the tape-shaped printing medium employing a cutting blade, instead of forming such slits. For example, a cutting blade may be provided downstream on the transporting direction from the ink-jet head, and the tape-shaped printing medium may be cut employing this cutting blade.

Further, it is desirable to have marks formed upon the said dummy surface in the longitudinal direction of the tape-shaped printing medium. This allows for the user to cut and remove the tape-shaped printing medium after printing in an accurate manner. The marks may be formed on the tape-shaped printing medium beforehand by means such as printing, or may be printed thereupon as necessary by using the ink-jet head.

As for the tape-shaped printing medium, rather than employing such as the aforementioned in which the image-receiving layer itself is wide, such possessing an image-receiving layer which is made to be an image-receiving surface, an adhesive layer formed on the reverse face of said image-receiving layer, and a peeling paper covering said adhesive layer, wherein the face of said peeling paper which faces said adhesive layer is provided with a formation of a exposed surface whereupon there is no deposition of said image-receiving layer nor said adhesive layer, said exposed surface comprising said dummy surface.

Next, the present invention relates to a method of printing upon a tape-shaped printing medium, which is cut to a predetermined length, thereby obtaining a piece of printed tape-shaped printing medium of a certain length, wherein solid printing can be conducted so as not to leave unprinted portions on the leading and trailing ends thereof. To this end, the present invention conducts solid printing from a point before the cutting position, or to a point beyond the cutting position, then cutting loose the unnecessary leading and trailing solid print portions, thereby obtaining solidly printed tape-shaped printing medium formed by cutting and without unprinted portions at the leading and trailing ends.

Now, the mechanism to cut the tape-shaped printing medium following printing is generally provided downstream on the transporting direction of the printing position. In this case, the tape-shaped printing medium is temporarily stopped and cut after the solid printing starting position carried by the already-printed tape-shaped printing medium has passed through said cutting position. If the position of stopping the tape-shaped printing medium is controlled, an effect can be obtained wherein the solid printing width in the longitudinal direction of the tape-shaped printing medium at the starting edge portion of the obtained solid printing carried on the tape-shaped printing medium can be adjusted.

In the same way, if the tape-shaped printing medium is temporarily stopped and cut before the solid printing finishing position carried by the already-printed tape-shaped printing medium passes through said cutting position, and if the position of stopping the tape-shaped printing medium is controlled, an effect can be obtained wherein the solid printing width in the longitudinal direction of the tape-shaped printing medium at the finishing edge portion of the obtained solid printing carried on the tape-shaped printing medium can be adjusted.

In the method of the present invention, the solid printing portions of the leading and trailing ends are cut loose, so as to obtain solid printing without unprinted portions on the leading and trailing ends. As a result, consumption of the tape-shaped printing medium increases for the amount of solid printing which is cut loose. Especially, in cases where solid printing is conducted consecutively, the amount of tape-shaped printing medium which is wasted increases. In order to decrease the amount of such wasted tape-shaped printing medium, the tape-shaped printing medium is moved backwards following the first solid printing action, and said printing position is positioned within the solid printing portion remaining from the previous solid printing on the leading end of said tape-shaped printing medium. Following this, the second solid printing action is started. As a result, the solid printing portion remaining from the first solid printing and the solid printing portion of the second solid printing overlap. Consequently, that much tape-shaped printing medium can be saved from going to waste.

Further, if the printing starting position of the second solid printing is adjusted according to the printing width of the first solid printing, even more tape can be saved from going to waste.

Further, when cutting tape-shaped printing medium to a predetermined length following printing, thereby obtaining a piece of printed tape-shaped printing medium of a certain length, if solid printing is to be conducted so as not to leave unprinted portions on the leading and trailing ends thereof, the tape-shaped printing medium is cut after the point where the starting edge of solid printing passes through the printing position, and, the tape-shaped printing medium is cut before the point where the finishing edge of solid printing passes through the printing position. As a result, the leading and trailing ends of the obtained tape-shaped printing medium are mid-way in the solid printing region which is printed without gaps. Consequently, a piece of tape-shaped printing medium comprised of an image-receiving surface carrying solid printing with unprinted portions on neither leading nor trailing ends can be obtained.

**Claims**

1. A printer for printing on a tape shaped recording medium (T) by means of a print head wherein the printer has tape ejection aperture (101b) and the recording medium has thereon, in its longitudinal direction, a first printing start position (P1) and a second printing start position (P0) of which the second printing start position is located nearer to said tape ejection aperture than the first printing start position, and wherein the printer is adapted to start a solid printing in the longitudinal direction of the recording medium at the second printing start position.

2. A printer for printing on a tape shaped recording medium (T) by means of a print head wherein the printer has a tape ejection aperture (101b) and the recording medium has thereon, in its longitudinal direction, a first printing end position (P2) and a second printing end position (P3) of which the second printing end position is located farther away from said tape ejection aperture than the first printing end position, and wherein the printer is adapted to stop a solid printing in the longitudinal direction of the recording medium at the second printing end position.

3. The printer of claim 1 further comprising a cutter on the tape ejection aperture side of the printer for cutting the recording medium in a direction across the width of the recording medium, the cutter being adapted to cut the recording medium at said first printing start position (P1) when the recording medium is transported in a forward feeding direction and the first printing start position P1 reaches a cutting position of the cutter.

4. The printer of claim 2 further comprising a cutter on the tape ejection aperture side of the printer for cutting the recording medium in a direction across the width of the recording medium, wherein the cutter is adapted to cut the recording medium in a direction across the width of the recording medium at said first printing end position (P2) when the recording medium is transported and the first printing end position reaches the cutting position of the cutter.

5. The printer of claim 4 further comprising backward moving means wherein, when a desired printing length is longer than the distance between a printing position defined by the print head and said cutting position, after printing, the recording medium is cut at said first printing start position (P1) and the recording medium is then moved in the direction opposite to said forward feeding direction so as to move said the first printing start position backwards of said cutting position.

6. The printer of any one of claims 3 to 5 wherein said cutting position is changeable.

7. The printer of any one of claims 1 to 6, wherein inks of the colors yellow, magenta and cyan are employed to enable color printing.

8. The printer of claim 4, wherein a plurality of portions of the recording medium (T) in the longitudinal direction thereof are printed, one after the other, each portion having said first and second printing start and end positions, and wherein, when printing on a next portion is started after printing of the previous portion was stopped at the second printing end position (P3) of the previous portion and the cutting operation was performed at the first printing end position (P2) of the previous portion, the first printing start position (P0) of the next portion is located nearer to the tape ejection aperture side of the printer than the second printing end position of the previous portion.

9. The printer of any one of claims 1 to 8 wherein said print head is an ink-jet head.

10. A method of performing solid printing on a tape-shaped recording medium by means of a printer, said printer having a tape ejection aperture (101b), comprising the steps of:

   (a) providing a recording medium (T),
   (b) defining on the recording medium, in its longitudinal direction, a first printing start position (P1) and a second printing start position (P0) of which the second printing start position is located nearer to said tape ejection aperture than the first printing start position, and
   (c) starting a solid printing in the longitudinal direction of the recording medium at the second printing start position.

11. A method of performing solid printing on a tape-shaped recording medium by means of a printer,

**EP 1 093 926 A2**

said printer having a tape ejection aperture (101b), comprising the steps of:

(a) providing a recording medium (T),
(b) defining on the recording medium, in its longitudinal direction, a first printing end position (P2) and a second printing end position (P3) of which the second printing end position is located farther away from said tape ejection aperture than the first printing end position, and
(c) stopping a solid printing in the longitudinal direction of the recording medium at the second printing end position.

# Fig. 1

# Fig. 2

# Fig. 3

# Fig. 4

# Fig. 5

(a)

(b)

(c)

Head movement direction

Tape transport direction

# Fig. 6

# Fig. 7

(a)

T10  335  321  322  323  321a  334

(b)

W 1

Wb  Wa  Wb

321a  321  322  335  323  T10

334

# Fig. 8

T20

355  346  355a  357

353  353a

345  354  354a

356  343  342  341

# Fig. 9

Transport direction

# Fig. 10

# Fig. 11

# Fig. 12

61        5

$y_1$

T

5b

5A

5b

$y_2$    5a

Cut position    17      Solid printing end position

# Fig. 13

61

$x_3$

$x_2$

P3

5

$x_1$

17

C11   Cut position No. 1

C12   Cut position No. 2

C13   Cut position No. 3

# Fig. 14

Discarding tape

Previos
solid
printing

T

X0

Next solid printing

Cut position

Overlapping position

# Fig. 15

Mark

# Fig. 16

C13 Cut No. 2
C12 Cut No. 2
C11 Cut No. 1

Printing start position

Printing end position